# EUROPÄISCHE PATENTSCHRIFT

(11) **EP 2 191 210 B1**
(45) Veröffentlichungstag und Bekanntmachung des Hinweises auf die Patenterteilung: **04.11.2015**
(21) Anmeldenummer: 08785779.3
(22) Anmeldetag: 01.09.2008
(51) Int. Cl.: F25B 5/02

(54) **FLUGZEUGKÜHLANLAGENVERDAMPFERANORDNUNG FÜR ZWEI VONEINANDER UNABHÄNGIGE KÄLTETRÄGERKREISLÄUFE**
AIRCRAFT COOLING SYSTEM EVAPORATOR ARRANGEMENT FOR TWO COOLING AGENT CIRCUITS THAT ARE INDEPENDENT FROM EACH OTHER
ENSEMBLE ÉVAPORATEUR DE SYSTÈMES RÉFRIGÉRANTS D'AVIONS DESTINÉ À DEUX CIRCUITS DE CALOPORTEUR INDÉPENDANTS

(30) Priorität: 31.08.2007 DE 102007041281; 31.08.2007 US 969227 P
(43) Veröffentlichungstag der Anmeldung: 02.06.2010
(73) Patentinhaber: Airbus Operations GmbH, 21129 Hamburg (DE)
(72) Erfinder: EBIGT, Wolfgang, 22763 Hamburg (DE); CASAS NORIEGA, Wilson, Willy, 21147 Hamburg (DE)
(74) Vertreter: Beyer, Andreas
(86) Internationale Anmeldenummer: PCT/EP2008/007128
(87) Internationale Veröffentlichungsnummer: WO 2009/030448

(56) Entgegenhaltungen:
- EP-A- 0 091 006
- EP-A- 1 806 547
- DE-A1-102006 006 731
- US-A1- 2006 288 713
- US-B1- 6 898 945

## Beschreibung

Die vorliegende Erfindung betrifft eine Flugzeugkühlanlagenverdampferanordnung mit mindestens zwei voneinander unabhängigen Kälteträgerkreisläufen.

In der folgenden Beschreibung und den beigefügten Ansprüchen wird mit dem Begriff "Kälteträger" ein Medium bezeichnet, das bei seiner Verwendung in einem Kühlsystem im Wesentlichen ohne Phasenänderung Kälte bzw. Wärme zwischen Orten unterschiedlicher Temperatur transportiert (kurzfristige lokale Phasenänderungen im Kälteträgermedium können allerdings auftreten). Dies gilt selbstverständlich für die Betriebsbedingungen, für die das betreffende System ausgelegt ist, da sich unter hinreichend extremen Bedingungen immer eine Phasenänderung hervorrufen lässt. Kälteträger liegen im Allgemeinen in flüssigem Zustand vor. Als Kälteträger kann beispielsweise mit Alkohol oder anderem Gefrierschutzmittel versetztes Wasser zum Einsatz kommen.

Der Begriff "Kältemittel" hingegen bezeichnet vorliegend ein Medium, das beim Kältetransport bzw. Wärmetransport seinen Aggregatzustand ändert. In der Regel wird gasförmiges Kältemittel in einem Kondensator abgekühlt und geht dabei in den flüssigen Zustand über. Durch Wärmeaustausch mit einem zu kühlenden Medium - beispielsweise dem Kälteträger - kann das flüssige Kältemittel verdampfen und das zu kühlende Medium abkühlen, indem es ihm die zur Verdampfung des Kältemittels notwendige Energie (Verdampfungsenthalpie) entzieht. Auch diese Definition bezieht sich auf die Bedingungen, für die das System ausgelegt ist, in dem das Kältemittel verwendet wird. Als Kältemittel finden häufig CO₂ oder Kohlenwasserstoffverbindungen Verwendung.

Moderne Verkehrsflugzeuge sind zumeist mit Kühlanlagen ausgestattet, um beispielsweise für Bordküchen Kühlfunktionen bereitzustellen. Die Kühlanlagen sind nicht mit den ebenfalls vorhandenen Klimaanlagen zur Regelung der Lufttemperatur und des Luftzustands in der Kabine zu verwechseln, und sind in aller Regel unabhängig von diesen. Insbesondere größere Flugzeuge verfügen häufig über mehr als einen Verbraucher mit Kühlbedarf, beispielsweise können mehrere Bordküchen vorhanden sein.

Bisher wurde diese Mehrzahl an Verbrauchern häufig dezentral versorgt. Jeder Verbraucher verfügte über eine eigene, ihm zugeordnete Kühlanlage bzw. Kältemaschine. Eine solche Kühlanlage wird in der Regel im Flug mit kühler Stauluft aus einem Staulufteinlass versorgt. Die Stauluft strömt durch einen Kondensator und kühlt dabei ein Kältemittel. Das Kältemittel wird über einen üblichen Kältemittelkreislauf einem Verdampfer zugeführt, in dem ein Kälteträger durch Wärmeaustausch mit dem Kältemittel gekühlt wird. Daher sind in herkömmlichen Systemen eine Vielzahl von unterschiedlichen Kältemaschinen beziehungsweise Verdampfern nötig, die auf den relativ geringen Kühlbedarf der einzelnen Verbraucher abgestimmt sind. Bei derartigen herkömmlichen Systemen wird Abwärme in den Flugzeugrumpf abgegeben, was die Klimaanlage zusätzlich belastet.

In modernen Verkehrsflugzeugen werden allerdings zunehmend zentrale Flugzeugkühlanlagen verwendet. Die verschiedenen Verbraucher werden mit gekühltem Kälteträger versorgt, wobei jeweils ein oder mehrere zentrale Verdampfungseinrichtungen zur Kühlung des Kälteträgers für mehrere Verbraucher vorgesehen sind. Das Kältemittel, mit dem der Kälteträger gekühlt wird, wird in derartigen Systemen durch Stauluft gekühlt, ähnlich wie oben beschrieben. Allerdings sind bei zentralen Systemen weniger, aber dafür größere Staulufteinlässe vorgesehen, um für genügend Kühlung zu sorgen.

In der Regel werden bei derartigen zentralen Kühlsystemen zwei unabhängige Kreisläufe für Kälteträger von zwei Kältemaschinen mit Kältemittelkreisläufen gekühlt, um eine Redundanz sicherzustellen. Häufig sind dabei die Verdampfer in einem Kältemittelkreislauf nacheinander in Serie angeordnet.

WO 2005/030579 A1 offenbart ein Kühlsystem für Flugzeugbordküchen, bei dem verschiedene Komponenten eines Kühlsystems von einem anderen Kühlsystem mit verwendet werden.

Die DE 1 601 023 offenbart einen Zwangsdurchlauf-Verdampfer für Kompressions-Kälteanlagen, bei der die Benetzung der Oberfläche einer Kanalwand mit Kühlmittelflüssigkeit erhöht ist. Ferner offenbart das Dokument, einen Temperaturfühler hinter einem Verdampfer anzuordnen, um ein Expansionsventil zu steuern, das vor dem Verdampfer angeordnet ist.

Auch die Dokumente US 6,880,353 B1, US 6,381,974 B1 und EP 1 780 479 A1 behandeln Kühlvorrichtungen.

Bei starker (Kühl-) Belastung der Kälteträgerkreisläufe, insbesondere bei unterschiedlich starker Belastung der Kälteträgerkreisläufe, kann das Problem auftreten, dass einer der Kälteträgerkreisläufe so viel Kühlung benötigt, dass das Kältemittel schon zu so großen Teilen in die Gasphase übergegangen ist, dass eine ausreichende Kühlung des nachfolgenden Kälteträgerkreislaufes nicht mehr möglich ist. Es kann sogar vorkommen, dass ein stark belasteter erster Kälteträgerkreislauf das Kältemittel in einem ersten Verdampfer vollständig verdampft, so dass nahezu keine Kühlung des zweiten Kreislaufes mehr möglich ist. Eine Messung und Steuerung des Kältemittelstromes an verschiedenen Stellen mit mehreren Sensoren und Ventilen, die solche Zustände verhindern helfen soll, ist aufwendig, teuer und komplex. DE 10 2006 006 731 offenbart eine Anordnung gemäß Oberbegriffs des Anspruchs 1. Es besteht daher Bedarf an einer Flugzeugkühlanlagenverdampferanordnung, die diese Probleme umgeht und dabei einfach und preisgünstig in der Herstellung ist.

### Abriss der Erfindung

Zur Lösung des oben genannten Problems sieht die vorliegende Erfindung eine Flugzeugkühlanlagenverdampferanordnung mit mindestens zwei voneinander unabhängigen Kreisläufen für Kälteträger, mindestens zwei hydraulisch parallel angeordneten Verdampfungseinrichtungen zum Ermöglichen eines Wärmeaustausches zwischen dem Kälteträger und einem Kältemittel, mindestens zwei Zufuhrleitungen zur Zufuhr von Kältemittel zu den Verdampfungseinrichtungen und mindestens zwei Abfuhrleitungen zur Abfuhr von Kältemittel aus den Verdampfungseinrichtungen vor. Dabei ist jedem Kälteträgerkreislauf eine der Verdampfungseinrichtungen, eine der Zufuhrleitungen und eine der Abfuhrleitungen zugeordnet. Verschiedenen Kälteträgerkreisläufen zugeordnete Zufuhrleitungen und Abfuhrleitungen sind jeweils hydraulisch getrennt angeordnet. Weiterhin ist jeder der Abfuhrleitungen mindestens ein Kältemittelsensor zur Überwachung eines Kältemittelzustands zugeordnet. Erfindungsgemäß umfasst die Verdampferanordnung außerdem ein Expansionsventil, das dazu ausgelegt ist, zum Steuern von Kältemittelströmen durch die Zufuhrleitungen nach Maßgabe der Kältemittelsensoren angesteuert zu werden. Es kann vorgesehen sein, die verschiedenen Kälteträgerkreisläufen zugeordneten Zufuhrleitungen und Abfuhrleitungen jeweils hydraulisch parallel anzuordnen.

Die erfindungsgemäße Flugzeugkühlanlagenverdampferanordnung erfordert nur ein einziges Expansionsventil, um mehrere Kältemittelströme zu steuern. Dadurch ist die Verdampferanordnung besonders preisgünstig und wartungsarm. Trotzdem lassen sich erforderliche Kältemittelströme zuverlässig einstellen, so dass die Kälteträgerkreisläufe jeweils ausreichend gekühlt werden können. Dies ermöglicht insbesondere eine Unabhängigkeit der Kältemittelversorgung der verschiedenen Kälteträgerkreisläufe dahingehend, dass nicht ein Kreislauf soviel Kältemittel verbraucht, dass ein anderer Kreislauf nicht mehr genügend gekühlt werden kann.

Vorzugsweise sind die Kältemittelsensoren als Temperatursensoren ausgebildet. Durch Bestimmen der Temperatur des Kältemittels stromabwärts der Verdampfungseinrichtungen lassen sich zuverlässig Rückschlüsse auf den Zustand des Kältemittels ziehen, insbesondere ist es möglich festzustellen, ob das Kältemittel vollständig verdampft ist. In alternativen Ausführungsformen können die Kältemittelsensoren auch als Drucksensoren oder Dichtesensoren ausgebildet sein. Auch andere Arten von Sensoren sind möglich, solange sie es gestatten, zuverlässig einen zu hohen Dampf- oder Gasanteil im Kältemittel stromabwärts einer Verdampfungseinrichtung festzustellen.

In einer Weiterbildung der Erfindung ist ferner eine Hauptkältemittelzuleitung vorgesehen, von der sich die Kältemittelzufuhrleitungen verzweigen. Insbesondere kann vorgesehen sein, dass das Expansionsventil in der Hauptkältemittelzuleitung angeordnet ist. Auf diese Weise kann das Expansionsventil einfach zum Steuern der Kältemittelströme durch die Zufuhrleitungen eingesetzt werden, da es sich an einer bezüglich der Kältemittelströme zentralen Position befindet.

Vorzugsweise findet die Verzweigung der Hauptkältemittelzuleitung in Kältemittelzufuhrleitungen gleichen Querschnitts statt. Dadurch wird ein mengenmäßig ausgeglichener Kältemittelstrom durch die Zufuhrleitungen gewährleistet.

Vorteilhafterweise sind die Abfuhrleitungen stromabwärts der mindestens einen Verdampfungseinrichtung zu einer Hauptkältemittelableitung zusammengeführt. Dies erleichtert das Führen des Kältemittels in einem geschlossenen Kältemittelkreislauf.

In einer weiteren Ausführungsform ist vorgesehen, dass die Verdampferanordnung eine Steuereinrichtung umfasst, die mit den Kältemittelsensoren und dem Expansionsventil verbunden ist. Dies ermöglicht ein leichtes Ansteuern des Expansionsventils nach Maßgabe der Kältemittelsensoren mittels der Steuereinrichtung. In der Steuereinrichtung können auch komplexe Steuerprogramme für das Expansionsventil realisiert sein.

Insbesondere kann vorgesehen sein, dass die Steuereinrichtung, auf Basis der durch die Kältemittelsensoren bestimmten Kältemittelzustände, einen Kälteträgerkreislauf zu bestimmen vermag, der unter einer größten Kühllast steht. Vorteilhafterweise vermag es die Steuereinrichtung ferner, das Expansionsventil nach Maßgabe desjenigen Kältesensors anzusteuern, der der Kältemittelabfuhrleitung zugehörig ist, die dem Kälteträgerkreislauf unter größter Kühllast zugeordnet ist. Somit kann das Expansionsventil derart angesteuert werden, dass die maximal erforderliche Kühllast von dem Kältemittel geliefert werden kann. Insbesondere wird verhindert, dass der unter größter Kühllast stehende Kälteträgerkreislauf nur unzureichend mit Kältemittel versorgt wird.

Zur Bestimmung des unter größter Kühllast stehende Kälteträgerkreislaufes kann dabei vorzugsweise der Sättigungsgrad von flüssigem Kältemittel in den Abfuhrleitungen dienen. Es ist davon auszugehen, dass der Kälteträgerkreislauf unter größter Kühllast am meisten flüssiges Kältemittel benötigt, um die erforderliche Kühlung zu gewährleisten. Die Abfuhrleitung mit dem niedrigsten Anteil an flüssigem Kältemittel (wie mittels der Kältemittelsensoren bestimmt) ist daher dem Kälteträgerkreislauf mit der größten Kühllast zugeordnet.

In einer Weiterbildung der Erfindung kann vorgesehen sein, dass das Expansionsventil elektrisch ansteuerbar ist. Dies ermöglicht ein besonders gut kontrolliertes Ansteuern und vermindert die Anzahl beweglicher Teile. Damit erhöht sich die Zuverlässigkeit der Ansteuerung des Expansionsventils und die Lebensdauer des Systems.

Es kann auch vorgesehen sein, dass die Kältemittelsensoren elektrische Sensorsignale auszusenden vermögen. Dabei ist es insbesondere zweckmäßig, die Steuereinrichtung als eine elektronische Steuereinrichtung auszubilden, die elektrische Sensorsignale von den Kältemittelsensoren zu empfangen und das Expansionsventil nach Maßgabe der Sensorsignale elektrisch anzusteuern vermag. Derartige elektrische Systeme lassen sich zuverlässiger und mit geringerem Gewicht ausbilden als beispielsweise mechanische Systeme mit ähnlicher Funktion.

In einer bevorzugten Ausführungsform der Erfindung sind die Verdampfungseinrichtungen integral miteinander ausgebildet. Dies bedeutet, dass die Verdampfungseinrichtungen gemeinsam in einem Bauteil realisiert sind. Dadurch lässt sich die Kühlung des Kälteträgers in den Kälteträgerkreisläufen platzsparend an einem Ort vornehmen. Gemäß einem weiteren Aspekt betrifft die vorliegende Erfindung ein Verfahren zum Betreiben einer Kühlanlage mit einer Verdampferanordnung, wie sie oben beschrieben ist, wobei das Verfahren die Schritte umfasst, Kältemittelzustände in Abfuhrleitungen durch Kältemittelsensoren zu überwachen und ein Expansionsventil zum Steuern von Kältemittelströmen durch Kältemittelzufuhrleitungen nach Maßgabe der Kältemittelsensoren anzusteuern.

Dabei kann auch vorgesehen sein, auf Basis der überwachten Kältemittelzustände in den Kältemittelabfuhrleitungen denjenigen Kälteträgerkreislauf zu bestimmen, welcher unter einer größten Kühllast steht. Das Expansionsventil wird dann nach Maßgabe desjenigen Kältemittelsensors angesteuert, der den Kältemittelzustand der dem Kälteträgerkreislauf unter größter Kühllast zugeordneten Kältemittelabfuhrleitung überwacht.

Die vorliegende Erfindung umfasst außerdem eine Kühlanlage eines Flugzeugs, die eine Verdampferanordnung wie vorstehend beschrieben aufweist. Außerdem umfasst die Erfindung ein Flugzeug, das eine solche Kühlanlage oder eine oben beschriebene Verdampferanordnung aufweist.

### Kurze Figurenbeschreibung

- Figur 1: zeigt schematisch eine Flugzeugkühlanlage.
- Figur 2: zeigt eine erfindungsgemäße Verdampferanordnung.

### Detaillierte Beschreibung der Figuren

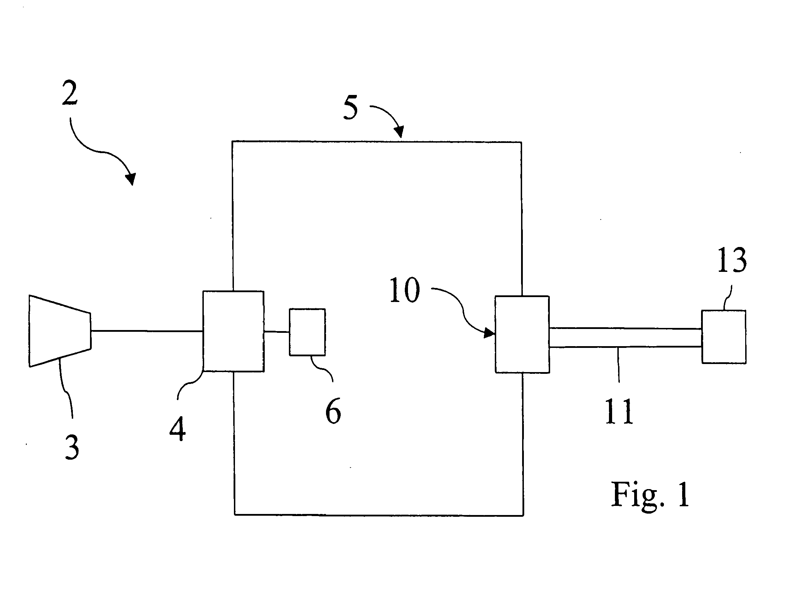

In Figur 1 ist schematisch eine Flugzeugkühlanlage 2 dargestellt. Die Flugzeugkühlanlage 2 hat einen Staulufteinlass 3, durch den kalte Luft aus der Außenumgebung des Flugzeugs zugeführt wird. Diese kalte Luft wird zu einem Kondensator 4 geführt, der Teil eines Kältemittelkreislaufs 5 ist. Über einen Luftauslass 6 kann die Stauluft, nachdem sie ihre Kühlfunktion erfüllt hat, wieder in die Außenumgebung des Flugzeugs abgelassen werden.

Der Kältemittelkreislauf 5 weist ferner einen Verdampfer 10 auf. Im Kältemittelkreislauf 5 wird ein Kältemittel geführt, das im Betrieb zwei Phasen annehmen kann, üblicherweise flüssig und gasförmig. In dieser vereinfachten Darstellung sind weitere, übliche Komponenten des Kältemittelkreislaufes wie Kompressor, Filter, usw. nicht gezeigt, um die Übersichtlichkeit der Figur zu erhalten; derartige Komponenten wird der Fachmann nach Bedarf hinzufügen.

Der Verdampfer 10 ist außerdem an einen Kreislauf 11 für einen Kälteträger angeschlossen. Der Kälteträgerkreislauf 11 bringt einen Kälteträger zu mehreren, insgesamt als 13 bezeichneten, Verbrauchern z.B. Kühlschränken von Bordküchen. Die genaue Dimensionierung und der Verlauf des Kälteträgerkreislaufes 11 ist durch die Erfordernisse und Anordnung der Verbraucher eines speziellen Flugzeugs gegeben.

Der Einfachheit halber ist hier nur ein Kälteträgerkreislauf 11 dargestellt, in der Regel sind allerdings zwei oder mehr Kälteträgerkreisläufe vorhanden, die am Verdampfer 10 angeschlossen sind. Diese mehreren Kälteträgerkreisläufe versorgen dann verschiedene Gruppen von Verbrauchern. Dadurch ergibt sich eine Redundanz, so dass bei Ausfall eines Kreislaufes für Kälteträger immer noch eine Kühlfähigkeit bereitgestellt werden kann.

Im Betrieb kühlt eintretende kalte Stauluft (die bei üblichen Flughöhen eine Temperatur von etwa -55° C hat) gasförmiges Kältemittel im Kondensator 4 ab, so dass das Kältemittel kondensiert. Auf der anderen Seite des Kältemittelkreislaufes 5 wird das Kältemittel im Verdampfer 10 in Wärmeaustausch mit dem Kälteträger im Kälteträgerkreislauf 11 gebracht. Das Kältemittel verdampft und entnimmt die dazu nötige Verdampfungsenergie dem Kälteträger, der dadurch abgekühlt wird. Der Kälteträger wird dann über den Kälteträgerkreislauf 11 den Verbrauchern 13 zugeführt.

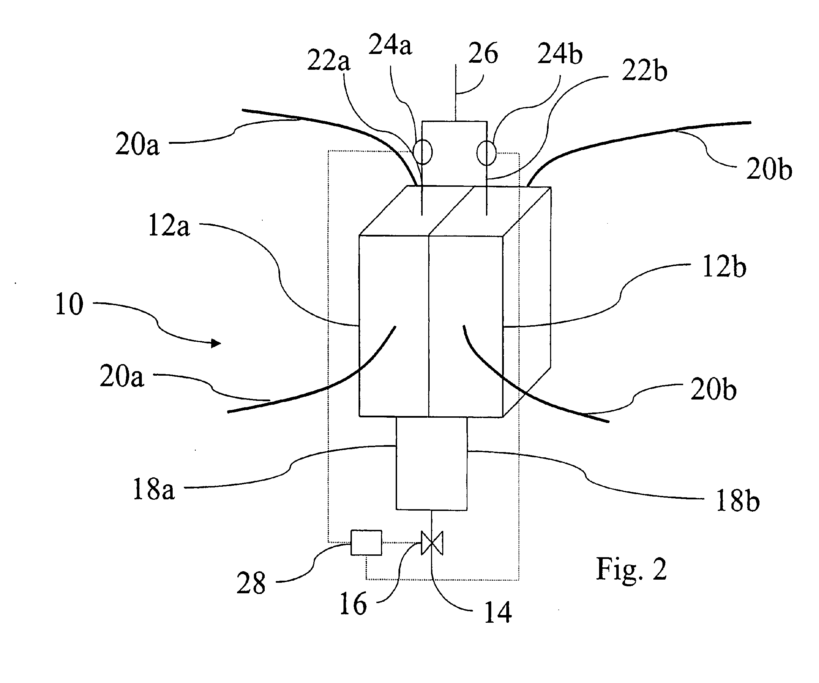

In Figur 2 ist eine erfindungsgemäße Verdampferanordnung 10 dargestellt. Die Verdampferanordnung 10 umfasst in dieser Ausführungsform einen Verdampfer, der aus zwei miteinander integral ausgebildeten, aber hydraulisch getrennten, Verdampfungseinrichtungen 12a, 12b besteht. Als Verdampfer kann jeder herkömmliche geeignete Verdampfer verwendet werden, z.B. ein Plattenverdampfer. Die hydraulische Trennung kann beispielsweise durch Einfügen einer Trennplatte in einen großen Verdampfer hergestellt werden, so dass hydraulisch parallel angeordnete Verdampfungseinrichtungen 12a, 12b in einem Bauteil bereitstehen. Die genaue Konstruktion des Verdampfers 10 bzw. der Verdampfungseinrichtungen 12a, 12b wird von den Erfordernissen des Flugzeugs bestimmt, für das sie gebaut werden.

Die Verdampfungseinrichtungen 12a, 12b sind auf bekannte Weise mit Kälteträgerkreisläufen 20a, 20b verbunden. Diese führen den Verdampfungseinrichtungen 12a, 12b Kälteträger zu, der in den Verdampfungseinrichtungen 12a, 12b abgekühlt werden soll. Ferner umfasst die Verdampferanordnung eine Hauptkältemittelzuleitung 14, in der ein Expansionsventil 16 angebracht ist. Die Hauptkältemittelzuleitung 14 verzweigt in zwei Kältemittelzufuhrleitungen 18a, 18b, die jeweils der Verdampfungseinrichtung 12a bzw. 12b Kältemittel zuführen. In den Verdampfungseinrichtungen 12a, 12b werden Kältemittel und Kälteträger zum Wärmeaustausch gebracht. Dabei verdampft ein mehr oder weniger großer Teil des Kältemittels.

Über Kältemittelabfuhrleitungen 22a, 22b wird das Kältemittel aus dem Verdampfer abgeführt. In den Kältemittelabfuhrleitungen 22a, 22b sind Kältemittelsensoren 24a, 24b vorgesehen, die den Zustand des Kältemittels überwachen. In dieser Ausführungsform sind die Kältemittelsensoren 24a, 24b als Temperaturfühler ausgebildet, welche die Temperatur des Kältemittels überwachen. Die Kältemittelsensoren 24a, 24b stellen elektrische Sensorsignale bereit.

Jeweils stromabwärts der Kältemittelsensoren 24a, 24b vereinigen sich die Kältemittelabfuhrleitungen 22a, 22b zu einer Hauptkältemittelableitung 26. In Figur 2 nicht gezeigt ist der vollständige Kältemittelkreislauf, in dem die Hauptkältemittelzuleitung 14 und die Hauptkältemittelableitung 26 so miteinander verbunden sind, dass sich ein geschlossener Kältemittelkreislauf ergibt, in dem die Kältemittelzufuhrleitungen 18a, 18b und die Kältemittelabfuhrleitungen 22a, 22b jeweils hydraulisch parallel angeordnet sind. Die Leitungen 18a, 18b beziehungsweise 22a, 22b sind also jeweils hydraulisch getrennt. Im Kältemittelkreislauf können ferner nicht gezeigte zusätzliche Komponenten wie z.B. ein Kondensator, ein Kompressor und/oder ein Filter vorgesehen sein.

Die Kältemittelsensoren 24a, 24b sind über elektrische Leitungen (in der Figur 2 gepunktet dargestellt) mit einer Steuereinrichtung 28 verbunden. Diese wiederum ist elektrisch mit dem Expansionsventil 16 verbunden und kann dieses nach Maßgabe der Sensoren 24a, 24b ansteuern. Die Steuereinrichtung 28 kann auch integral mit dem Expansionsventil 16 ausgebildet sein.

Im Betrieb ist vorgesehen, dass die Kältemittelsensoren 24a, 24b den Zustand des die Verdampfungseinrichtungen 12a, 12b verlassenden Kältemittels überwachen und Sensorsignale an die Steuereinrichtung 28 übertragen. Die Temperatur des Kältemittels dient als ein Maßstab für seinen Grad an Sättigung mit Kältemittel in flüssiger Phase. Befindet sich die Temperatur über einem kritischen Wert, der von den genauen Bedingungen des Kühlsystems und dem verwendeten Kühlmittel abhängt, ist der Anteil an flüssigem Kühlmittel zu gering oder gar nicht mehr vorhanden. Die kritische Temperatur kann für jedes System nach Bedarf festgelegt werden.

Wenn einer der Sensoren 24a, 24b eine zu hohe Temperatur meldet, die auf zu starkes Verdampfen des Kältemittels in der zugehörigen Verdampfungseinrichtung 12a, 12b (insbesondere aufgrund einer hohen Kühllast des Kälteträgerkreislaufes) hindeutet, steuert die Steuereinrichtung 28 das Expansionsventil 16 derart an, dass der Kältemittelstrom durch das Expansionsventil 16 erhöht wird. In dieser Ausführungsform richtet sich die Steuereinrichtung 28 bei der Bewertung, ob das Expansionsventil 16 weiter zu öffnen oder zu schließen ist, nach dem Kältemittelsensor 24a, 24b, der in derjenigen Abfuhrleitung 22a, 22b angeordnet ist, die dem Kälteträgerkreislauf mit der höchsten Kühllast zugeordnet ist. Dabei wird die Abfuhrleitung 22a, 22b, in welcher der Anteil an flüssigem Kältemittel am niedrigsten ist (in dieser Ausführungsform, diejenige, in der die Temperatur des Kältemittels am höchsten ist) als diejenige Abfuhrleitung 22a, 22b angenommen, die dem Kälteträgerkreislauf 20a, 20b mit der höchsten Kühllast zugeordnet ist. In anderen Ausführungsformen können andere Arten von Sensoren verwendet werden, die einem anderen Zusammenhang zwischen dem von ihnen gemessenen Parameter und dem Sättigungsgrad des Kältemittels folgen.

Durch Vergrößern des Kältemittelflusses durch das Expansionsventil 16 ergeben sich erhöhte Kältemittelströme in den Kältemittelzufuhrleitungen 18a, 18b und durch die Verdampfungseinrichtungen 12a, 12b. Die Ansteuerung kann dabei in einem kleinen, festgelegten Öffnungsschritt erfolgen, in dem das Expansionsventil 16 nur um einen solchen kleinen festgelegten Schritt weiter geöffnet wird. Sollten weitere Sensormessungen ergeben, dass immer noch nicht genügend Kältemittel bereitgestellt wird, so bewirkt die Steuereinrichtung 28 eine weitergehende Öffnung des Expansionsventils 16. Dies wird solange durchgeführt, bis der Zustand des Kältemittels stromabwärts der Verdampfungseinrichtungen 12a, 12b hinreichend mit flüssigem Kältemittel gesättigt ist, um sicherzustellen, dass ausreichend Kühlung für beide Kälteträgerkreisläufe 20a, 20b zur Verfügung steht.

Es ist selbstverständlich auch möglich, bestimmte Öffnungszustände des Expansionsventils 16 bestimmten Kältemittelzuständen des stärker belasteten Zweiges der Abfuhrleitungen 22a, 22b zuzuordnen. Die Steuereinrichtung 28 steuert dann das Expansionsventil 16 immer so an, wie es der relevante Kältemittelzustand erfordert. Durch den erhöhten Kältemittelstrom wird verhindert, dass das Kältemittel vollständig verdampft, ohne eine ausreichende Kühlwirkung zu erzielen.

Wenn beide Sensoren 24a, 24b anzeigen, dass das Kältemittel zu einem wesentlichen Teil nicht verdampft wird, kann die Steuereinrichtung 28 das Expansionsventil 16 derart ansteuern, dass der Kältemittelstrom durch das Ventil 16 sich verringert. Daraus ergibt sich ein verringerter Kältemittelfluss durch die Kältemittelzufuhrleitungen 18a, 18b. Auch das Schließen des Expansionsventils 16 kann in kleinen Schritten erfolgen, mit anschließendem Überprüfen, ob der Kältemittelzustand im stärker belasteten Zweig den gewünschten Zustand erreicht hat, und eventuellem Nachregeln, analog zu dem oben beschriebenen Vorgehen. Vorzugsweise ist die Steuereinrichtung dazu ausgelegt, den Kältemittelstrom bzw. das Expansionsventil 16 so zu steuern, dass die erforderliche Kühlleistung des am stärksten belasteten Kälteträgerkreislaufes 20a, 20b unter den günstigsten Betriebsbedingungen für die Kühlanlage bereitgestellt wird.

Die beschriebene Anordnung stellt sicher, dass durch jede Verdampfungseinrichtung 12a, 12b genügend Kältemittel strömt, um die Kälteträgerkreisläufe ausreichend mit Kühlung zu versorgen. Die vorliegende Erfindung ist nicht auf das oben beschriebene Ausführungsbeispiel beschränkt, sondern kann in verschiedenen Variationen ausgeführt werden. Es kann z.B. vorgesehen sein, mehr als zwei Kälteträgerkreisläufe und eine entsprechende Anzahl von Verdampfungseinrichtungen sowie Kältemittelsensoren anzuordnen.

## Patentansprüche

1. Flugzeugkühlanlagenverdampferanordnung (10) mit:
- mindestens zwei voneinander unabhängigen Kreisläufen (20a, 20b) für einen Kälteträger;
- mindestens zwei hydraulisch parallel angeordneten Verdampfungseinrichtungen (12a, 12b) zum Ermöglichen eines Wärmeaustausches zwischen dem Kälteträger und einem Kältemittel;
- mindestens zwei Zufuhrleitungen (18a, 18b) zur Zufuhr von Kältemittel zu den Verdampfungseinrichtungen (12a, 12b);
- mindestens zwei Abfuhrleitungen (22a, 22b) zur Abfuhr von Kältemittel aus den Verdampfungseinrichtungen (12a, 12b);
- wobei jedem Kälteträgerkreislauf (20a, 20b) eine der Verdampfungseinrichtungen (12a, 12b), eine der Zufuhrleitungen (18a, 18b) und eine der Abfuhrleitungen (22a, 22b) zugeordnet ist;
- wobei ferner jeder der Abfuhrleitungen (22a, 22b) mindestens ein Kältemittelsensor (24a, 24b) zur Überwachung eines Kältemittelzustands zugeordnet ist, **dadurch gekennzeichnet, daß**
- die verschiedenen Kälteträgerkreisläufen (20a, 20b) zugeordneten Zufuhrleitungen (18a, 18b) und Abfuhrleitungen (22a, 22b) jeweils hydraulisch getrennt angeordnet sind;
- und die Flugzeugkühlanlagenverdampferanordnung (10) ein Expansionsventil (16) umfasst, das dazu ausgelegt ist, zum Steuern von Kältemittelströmen durch die zumindest zwei Zufuhrleitungen (18a, 18b), nach Maßgabe der Kältemittelsensoren (24a, 24b) angesteuert zu werden.

2. Verdampferanordnung nach Anspruch 1,
bei der die Kältemittelsensoren (24a, 24b) Temperatursensoren oder Drucksensoren oder Dichtesensoren sind.

3. Verdampferanordnung nach einem der vorhergehenden Ansprüche,
bei der ferner eine Hauptkältemittelzuleitung (14) vorgesehen ist, von der sich die Kältemittelzufuhrleitungen (18a, 18b) verzweigen.

4. Verdampferanordnung nach Anspruch 3,
bei der das Expansionsventil (16) in der Hauptkältemittelzuleitung (14) angeordnet ist.

5. Verdampferanordnung nach Anspruch 3 oder 4,
bei der die Verzweigung der Hauptkältemittelzuleitung (14) in Kältemittelzufuhrleitungen (18a, 18b) gleichen Querschnitts erfolgt.

6. Verdampferanordnung nach einem der vorhergehenden Ansprüche,
bei der die Abfuhrleitungen (22a, 22b) stromabwärts der mindestens zwei Verdampfungseinrichtungen (12a, 12b) zu einer Hauptkältemittelableitung (26) zusammengeführt werden.

7. Verdampferanordnung nach einem der vorhergehenden Ansprüche,
bei der die Verdampferanordnung (10) ferner eine Steuereinrichtung (28) umfasst, die mit den Kältemittelsensoren (24a, 24b) und dem Expansionsventil (16) verbunden ist.

8. Verdampferanordnung nach Anspruch 7,
bei der die Steuereinrichtung (28) auf Basis der durch die Kältemittelsensoren (24a, 24b) bestimmten Kältemittelzustände einen Kälteträgerkreislauf (20a, 20b) zu bestimmen vermag, der unter einer größten Kühllast steht.

9. Verdampferanordnung nach Anspruch 8,
bei der die Steuereinrichtung (28) das Expansionsventil (16) nach Maßgabe desjenigen Kältemittelsensors (24, 24b) anzusteuern vermag, der der Kältemittelabfuhrleitung (22a, 22b) zugeordnet ist, die dem Kälteträgerkreislauf (20a, 20b) unter größter Kühllast zugeordnet ist.

10. Verdampferanordnung nach einem der vorhergehenden Ansprüche,
bei der das Expansionsventil (16) elektrisch ansteuerbar ist.

11. Verdampferanordnung nach einem der vorhergehenden Ansprüche,
bei der die Kältemittelsensoren (24a, 24b) elektrische Sensorsignale auszusenden vermögen.

12. Verdampferanordnung nach Ansprüchen 7, 10 und 11,
bei der die Steuereinrichtung (28) elektrische Sensorsignale von den Kältemittelsensoren (24a, 24b) zu empfangen und das Expansionsventil (16) nach Maßgabe der Sensorsignale elektrisch anzusteuern vermag.

13. Verdampferanordnung nach einem der vorhergehenden Ansprüche,
bei der die Verdampfungseinrichtungen (12a, 12b) integral miteinander ausgebildet sind.

14. Verfahren zum Betreiben einer Kühlanlage mit einer Verdampferanordnung (10) nach einem der vorhergehenden Ansprüche, wobei das Verfahren die Schritte umfasst:
- Überwachen von Kältemittelzuständen in Abfuhrleitungen (22a, 22b) durch Kältemittelsensoren (24a, 24b);
- Ansteuern eines Expansionsventils (16) zum Steuern von Kältemittelströmen durch Kältemittelzufuhrleitungen (18a, 18b) nach Maßgabe der Kältemittelsensoren (24a, 24b).

15. Verfahren nach Anspruch 14,
wobei das Verfahren ferner die Schritte umfasst:
- Bestimmen, auf Basis der überwachten Kältemittelzustände in den Kältemittelabfuhrleitungen (22a, 22b), des unter einer größten Kühllast stehenden Kälteträgerkreislaufes (20a, 20b);
- Ansteuern des Expansionsventils (16) nach Maßgabe desjenigen Kältemittelsensors (24a, 24b), der den Kältemittelzustand in der dem Kälteträgerkreislauf (20a, 20b) unter größter Kühllast zugeordneten Kältemittelabfuhrleitung (22a, 22b) überwacht.

16. Kühlanlage eines Flugzeugs, die eine Verdampferanordnung (10) nach einem der Ansprüche 1 bis 13 aufweist.

17. Flugzeug, das eine Kühlanlage nach Anspruch 16 aufweist.

## Claims

1. Aircraft cooling system evaporator arrangement (10), including:
- at least two mutually independent circuits (20a, 20b) for a coolant;
- at least two evaporation devices (12a, 12b) arranged to be hydraulically parallel for enabling an exchange of heat between the coolant and a refrigerant;
- at least two supply lines (18a, 18b) for supplying refrigerant to the evaporation devices (12a, 12b);
- at least two discharge lines (22a, 22b) for discharging refrigerant from the evaporation devices (12a, 12b);
- one of the evaporation devices (12a, 12b), one of the supply lines (18a, 18b) and one of the discharge lines (22a, 22b) being assigned to each coolant circuit (20a, 20b);
- furthermore at least one refrigerant sensor (24a, 24b) for monitoring a refrigerant state being assigned to each of the discharge lines (22a, 22b), **characterized in that** the supply lines (18a, 18b) and discharge lines (22a, 22b) assigned to different coolant circuits (20a, 20b) are arranged to be hydraulically separate in each instance;
- and the aircraft cooling system evaporator arrangement (10) further includes an expansion valve (16) which for the purpose of controlling streams of refrigerant through the at least two supply lines (18a, 18b) is designed to be controlled in accordance with the refrigerant sensors (24a, 24b).

2. Evaporator arrangement according to Claim 1,
wherein the refrigerant sensors (24a, 24b) are temperature sensors or pressure sensors or density sensors.

3. Evaporator arrangement according to one of the preceding claims,
wherein furthermore a main refrigerant feeder (14) is provided, from which the refrigerant supply lines (18a, 18b) branch out.

4. Evaporator arrangement according to Claim 3,
wherein the expansion valve (16) is arranged in the main refrigerant feeder (14).

5. Evaporator arrangement according to Claim 3 or 4,
wherein the branching of the main refrigerant feeder (14) is effected into refrigerant supply lines (18a, 18b) of identical cross-section.

6. Evaporator arrangement according to one of the preceding claims,
wherein the discharge lines (22a, 22b) merge downstream of the at least two evaporation devices (12a, 12b) to form a main refrigerant drain (26).

7. Evaporator arrangement according to one of the preceding claims,
wherein the evaporator arrangement (10) further includes a control device (28) which is connected to the refrigerant sensors (24a, 24b) and to the expansion valve (16).

8. Evaporator arrangement according to Claim 7,
wherein the control device (28) is adapted to determine, on the basis of the refrigerant states determined by the refrigerant sensors (24a, 24b), a coolant circuit (20a, 20b) that is subjected to a greatest cooling load.

9. Evaporator arrangement according to Claim 8,
wherein the control device (28) is adapted to drive the expansion valve (16) in accordance with that refrigerant sensor (24, 24b) which is assigned to the refrigerant discharge line (22a, 22b) that is assigned to the coolant circuit (20a, 20b) subjected to the greatest cooling load.

10. Evaporator arrangement according to one of the preceding claims,
wherein the expansion valve (16) is adapted to be controlled electrically.

11. Evaporator arrangement according to one of the preceding claims,
wherein the refrigerant sensors (24a, 24b) are adapted to emit electrical sensor signals.

12. Evaporator arrangement according to Claims 7, 10 and 11,
wherein the control device (28) is adapted to receive electrical sensor signals from the refrigerant sensors (24a, 24b) and to control the expansion valve (16) electrically in accordance with the sensor signals.

13. Evaporator arrangement according to one of the preceding claims,
wherein the evaporation devices (12a, 12b) are integrally formed with one another.

14. Process for operating a cooling system with an evaporator arrangement (10) according to one of the preceding claims, the process including the steps of:
- monitoring refrigerant states in discharge lines (22a, 22b) by means of refrigerant sensors (24a, 24b);
- driving an expansion valve (16) in accordance with the refrigerant sensors (24a, 24b) for the purpose of controlling streams of refrigerant through refrigerant supply lines (18a, 18b).

15. Process according to Claim 14,
the process further including the steps of:
- determining, on the basis of the monitored refrigerant states in the refrigerant discharge lines (22a, 22b), the coolant circuit (20a, 20b) subjected to a greatest cooling load;
- driving the expansion valve (16) in accordance with that refrigerant sensor (24a, 24b) which monitors the refrigerant state in the refrigerant discharge line (22a, 22b) assigned to the coolant circuit (20a, 20b) subjected to the greatest cooling load.

16. Cooling system of an aircraft including an evaporator arrangement (10) according to one of Claims 1 to 13.

17. Aircraft including a cooling system according to Claim 16.

## Revendications

1. Ensemble évaporateur de système de réfrigération pour aéronef (10), comprenant
- au moins deux circuits (20a, 20b) indépendants l'un de l'autre, servant à acheminer un frigoporteur ;
- au moins deux dispositifs d'évaporation (12a, 12b) disposés hydrauliquement en parallèle servant à permettre un échange thermique entre le frigoporteur et un frigorigène ;
- au moins deux conduites d'amenée (18a, 18b) servant à amener le frigorigène auxdits dispositifs d'évaporation (12a, 12b) ;
- au moins deux conduites d'évacuation (22a, 22b) servant à évacuer le frigorigène présent dans les dispositifs d'évaporation (12a, 12b) ;
- un des dispositifs d'évaporation (12a, 12b), une des conduites d'amenée (18a, 18b) et une des conduites d'évacuation (22a, 22b) étant associés à chacun des circuits frigoporteurs (20a, 20b) ;
- au moins un capteur de frigorigène (24a, 24b) destiné à la surveillance d'un état de frigorigène étant en outre associé à chacune des conduites d'évacuation (22a, 22b), **caractérisé en ce que** les conduites d'amenée (18a, 18b) et les conduites d'évacuation (22a, 22b) associées à différents circuits frigoporteurs (20a, 20b) sont respectivement séparées hydrauliquement ;
- et l'ensemble évaporateur de système de réfrigération pour aéronef (10) comporte une soupape de détente (16) conçue pour être actionnée en fonction des capteurs de frigorigène (24a, 24b) afin de commander le passage de flux de frigorigène à travers lesdites au moins deux conduites d'amenée (18a, 18b).

2. Ensemble évaporateur selon la revendication 1,
dans le cadre duquel les capteurs de frigorigène (24a, 24b) consistent en des capteurs de température ou des capteurs de pression ou des capteurs de densité.

3. Ensemble évaporateur selon l'une des revendications précédentes,
dans le cadre duquel il est prévu une conduite de frigorigène principale (14) d'où sont dérivées les conduites d'amenée de frigorigène (18a, 18b).

4. Ensemble évaporateur selon la revendication 3,
dans le cadre duquel la soupape de détente (16) est disposée dans la conduite de frigorigène principale (14).

5. Ensemble évaporateur selon la revendication 3 ou 4,
dans le cadre duquel la dérivation à partir de la conduite de frigorigène principale (14) s'effectue par le biais de conduites d'amenée de frigorigène (18a, 18b) de section identique.

6. Ensemble évaporateur selon l'une des revendications précédentes,
dans le cadre duquel les conduites d'évacuation (22a, 22b) se rejoignent en aval desdits au moins deux dispositifs d'évaporation (12a, 12b) pour former une conduite d'évacuation de frigorigène principale (26).

7. Ensemble évaporateur selon l'une des revendications précédentes,
dans le cadre duquel l'ensemble évaporateur (10) comprend en outre un dispositif de commande (28) relié aux capteurs de frigorigène (24a, 24b) et à la soupape de détente (16).

8. Ensemble évaporateur selon la revendication 7,
dans le cadre duquel le dispositif de commande (28) est, sur la base des états de frigorigène détectés par les capteurs de frigorigène (24a, 24b), en mesure de déterminer un circuit frigoporteur (20a, 20b) soumis à une plus grande charge de refroidissement.

9. Ensemble évaporateur selon la revendication 8,
dans le cadre duquel le dispositif de commande (28) est en mesure d'actionner la soupape de détente (16) en fonction du capteur de frigorigène (24, 24b) associé à la conduite d'évacuation de frigorigène (22a, 22b) associée au circuit frigoporteur (20a, 20b) soumis à la plus grande charge de refroidissement.

10. Ensemble évaporateur selon l'une des revendications précédentes,
dans le cadre duquel la soupape de détente (16) est actionnée électriquement.

11. Ensemble évaporateur selon l'une des revendications précédentes,
dans le cadre duquel les capteurs de frigorigène (24a, 24b) sont en mesure d'émettre des signaux de capteur électriques.

12. Ensemble évaporateur selon les revendications 7, 10 et 11,
dans le cadre duquel le dispositif de commande (28) est en mesure de recevoir des signaux de capteur électriques provenant des capteurs de frigorigène (24a, 24b) et d'actionner électriquement la soupape de détente (16) en fonction desdits signaux de capteur.

13. Ensemble évaporateur selon l'une des revendications précédentes,
dans le cadre duquel les dispositifs d'évaporation (12a, 12b) sont formés en un seul bloc solidaire.

14. Procédé destiné à faire fonctionner un système de réfrigération pourvu d'un ensemble évaporateur (10) selon l'une des revendications précédentes, ce procédé comportant les étapes suivantes :
- la surveillance d'états de frigorigène dans les conduites d'évacuation (22a, 22b) ;
- l'actionnement d'une soupape de détente (16) pour commander des flux de frigorigène à travers des conduites d'amenée de frigorigène (18a, 18b) en fonction des capteurs de frigorigène (24a, 24b).

15. Procédé selon la revendication 14,
ce procédé comportant en outre les étapes suivantes :
- la détermination, sur la base des états de frigorigène surveillés dans les conduites d'évacuation de frigorigène (22a, 22b), du circuit frigoporteur (20a, 20b) soumis à une plus grande charge de refroidissement ;
- l'actionnement de la soupape de détente (16) en fonction du capteur de frigorigène (24a, 24b) qui surveille l'état de frigorigène dans la conduite d'évacuation de frigorigène (22a, 22b) associée au circuit frigoporteur (20a, 20b) soumis à la plus grande charge de refroidissement.

16. Système de réfrigération pour aéronef qui présente un ensemble évaporateur (10) selon l'une des revendications 1 à 13.

17. Aéronef équipé d'un système de réfrigération selon la revendication 16.
